# EUROPÄISCHE PATENTSCHRIFT

(11) **EP 0 759 129 B1**
(45) Veröffentlichungstag und Bekanntmachung des Hinweises auf die Patenterteilung: **05.08.1998**
(21) Anmeldenummer: 95919415.0
(22) Anmeldetag: 06.05.1995
(51) Int. Cl.: F16H 3/093

(54) **UNTER LAST SCHALTBARES, MEHRGÄNGIGES WENDEGETRIEBE**
MULTI-RATIO REVERSING POWER SHIFTABLE GEAR
BOITE D'INVERSION A PLUSIEURS RAPPORTS COUPLABLE SOUS CHARGE

(30) Priorität: 13.05.1994 DE 4416930
(43) Veröffentlichungstag der Anmeldung: 26.02.1997
(73) Patentinhaber: ZF FRIEDRICHSHAFEN Aktiengesellschaft, 88038 Friedrichshafen (DE)
(72) Erfinder: LEBER, Fritz, D-88048 Friedrichshafen (DE); REBHOLZ, Wolfgang, D-88045 Friedrichshafen (DE)
(86) Internationale Anmeldenummer: EP9501721
(87) Internationale Veröffentlichungsnummer: WO9531654

(56) Entgegenhaltungen:
- DE-A- 2 535 700
- DE-B- 1 129 838
- GB-A- 2 111 612

## Beschreibung

Die Erfindung betrifft ein unter Last schaltbares, mehrgängiges Wendegetriebe mit einer Eingangswelle, Vorgelegewellen und Zahnrädern, die einen Antriebsrädersatz bilden sowie auf den Vorgelegewellen angeordneten Schaltkupplungen mit Losrädern, die zur Gang- und Richtungsschaltung wahlweise drehfest mit einer der Vorgelegewellen verbindbar sind sowie einer Abtriebsräderkette mit mindestens einem Festrad.

Bei den heute im Einsatz befindlichen Baumaschinen kommen Getriebe zur Anwendung, die im wesentlichen in zwei Gruppen unterteilt werden können. Kennzeichnend für eine Gruppe ist, daß dem Lastschaltgetriebe eine hydrostatische Antriebseinheit vorgeschaltet ist. Die Drehzahl- und Drehmomentanpassung der Vorschaltgruppe wird bei diesen Getrieben über hydraulische bzw. elektro-hydraulische Steuerungen realisiert.

Die überwiegende Anzahl der eingesetzten Getriebe gehört zu der weiteren Gruppe der Lastschaltgetriebe mit vorgeschaltetem, hydrodynamischen Drehmomentwandler. Mit Hilfe dieser Antriebseinheit läßt sich eine stufenlose und selbsttätige Drehmomentsteigerung bei anwachsendem Arbeitswiderstand des Kraftfahrzeuges, beispielsweise einer Baumaschine, erreichen. Es können hierbei Getriebeantriebsmomente erzeugt werden, die etwa dem dreifachen Wert des Motordrehmomentes entsprechen. Dies ist deswegen von Bedeutung, da, anders als dies beim Pkw der Fall ist, mit dem Getriebe bzw. Wandler gearbeitet wird. Bei einem Radlader wird beispielsweise die Schaufel in aufzunehmendes Erdreich hineingedrückt. Die Füllung wird losgebrochen und angehoben. Zum Beladen wird das Fahrzeug reversiert, die Schaufel wird weiter angehoben und entladen. Die Drehmomentwandlung ist ein großer Vorteil gerade bei geringen Geschwindigkeiten und großen Drehzahldifferenzen zwischen dem An- und Abtrieb.

Der Wandler kann durch eine Wandlerüberbrückungskupplung ergänzt werden. Mit Hilfe dieser Kupplung lassen sich im Bereich höherer Drehzahlen innerhalb der Gänge erhebliche Verbrauchseinsparungen erreichen.

Der Kraftfluß in den einzelnen Gängen wird durch eine Kombination von hydraulisch schaltbaren Kupplungen hergestellt. Diese Kupplungen müssen unter anderem zum Reversieren unter Last schaltbar sein und nehmen daher viel Energie auf. Die Bauweise des Gehäuses bzw. die Anordnung der Wellen des Getriebes muß einer Anwendung spezifisch angepaßt sein. Typische Anwendungsfälle für ein Wendegetriebe sind der Einsatz in Dumpern, Radladern, Baggerladern und Staplern, aber auch bei Fahrzeugen, die auf der Straße betrieben werden, zum Beispiel bei Kranfahrzeugen. Je nach Fahrzeugtyp ist ein bestimmter Achsversatz zwischen der Einund Ausgangswelle des Getriebes erforderlich. Lange Achsabstände sind beispielsweise dann einzuhalten, wenn die Beugungswinkel von Gelenkwellen klein gehalten werden müssen. In diesem Fall übernimmt das Wendegetriebe eine zusätzliche Funktion als Verteilergetriebe.

Bei Staplern hat das Wendegetriebe lediglich eine Ausgangswelle. Wegen der räumlichen Verhältnisse ist ein geringer Achsabstand erforderlich.

In den meisten Fällen ist mindestens ein motordrehzahlabhängig getriebener Nebenabtrieb, zum Beispiel für die Hydraulik der Arbeitsmaschine, erforderlich. Im Strang zum Nebenabtrieb ist ferner eine Schmiermittel- und Schaltpumpe vorgesehen, die ebenfalls in Abhängigkeit von der Motordrehzahl betrieben wird.

Durch die Bauart der Fahrzeuge bedingt, sind die Aufgaben, die ein Wendegetriebe zu erfüllen hat, sehr unterschiedlich.

Aus der DE-B-11 29 838 ist ein Wendegetriebe gemäß dem Oberbegriff des Anspruchs 1, bzw 6 bekannt, das sich durch eine geringe axiale Baulänge auszeichnet. Auf einer Antriebswelle befindet sich ein Festrad, das mit Festrädern auf einer Umkehrwelle und einer Vorgelegewelle ständig im Eingriff steht. Sämtliche Losräder liegen auf einer Seite des Getriebes und kämmen ständig miteinander. Zwischen den Los- und Festrädern ist jeweils eine Reibungskupplung angeordnet. Bei diesem bekannten Wendegetriebe gestaltet sich der konstruktive Aufbau der Reibungskupplungen, insbesondere die Anordnung der Lamellenpakete, die Lagerung der Losräder auf den Vorgelegewellen und auch die auf der Seite der Losräder mittelbare Lagerung der Vorgelegewelle selbst relativ aufwendig.

Aus der DE-A-25 35 700 ist ein Wendegetriebe bekanntgeworden, bei dem die Reibungskupplungen als Doppelkupplungen ausgebildet sind. Bei diesem Getriebe läßt sich eine relativ hohe Gangzahl realisieren, jedoch ist in Axialrichtung ein größerer Bauraum erforderlich, da auf einer Vorgelegewelle bis zu vier Zahnräder und eine Doppelkupplung unterzubringen sind.

Der vorliegenden Erfindung liegt die Aufgabe zugrunde, ein lastschaltbares Wendegetriebe mit einer geringen axialen Baulänge zu schaffen, das bei prinzipiell gleichem Aufbau hinsichtlich der möglichen Gangzahl und der erforderlichen Achsabstände unterschiedliche Varianten zuläßt.

Eine mögliche Lösung der gestellten Aufgabe besteht darin, daß auf jeder Vorgelegewelle eine einzige Schaltkupplung angeordnet ist, daß ein Festrad und mit diesem in ständigem Eingriff befindliche Losräder einen Antriebsrädersatz bilden, daß ein auf der Vorgelegewelle angeordnetes Festrad mit zwei Losrädern in ständigem Eingriff stehen und eine Abtriebsräderkette bilden und daß die Vorgelegewellen durch Festräder und ein Losrad, die einen Verteilerrädersatz bilden, miteinander verbunden sind. Da für jede Vorgelegewelle eine einzige Schaltkupplung vorgesehen ist, ergibt sich, selbst bei einem sechsgängigen Wendegetriebe, eine axial kurze Bauweise. Die Vorgelegewellen weisen aufgrund ihrer kurzen Baulänge eine geringe Durchbiegung auf. Sie können beidseitig in Wälzlagern im Getriebegehäuse gelagert werden. Die eingesetzten Losräder weisen jeweils einen einzigen Zahneingriff auf; sie werden nicht als Zwischenräder verwendet. Durch die vorgeschlagene Ausbildung der Vorgelegewellen sind lange und kurze Achsabstände gleichermaßen realisierbar.

Es hat sich als vorteilhaft erwiesen, wenn dem auf der Vorgelegewelle angeordneten Festrad der Abtriebsräderkette ein Losrad des Verteilerrädersatzes gegenüberliegt. Das Festrad auf der Vorgelegewelle, die auch die Ausgangswelle des Getriebes sein kann, weist einen relativ großen Durchmesser auf. Vorzugsweise ist es schrägverzahnt. Für die Lagerung steht eine große Lagerbasis zur Verfügung. Aufgrund der Last- und Drehzahlverhältnisse ist es vorteilhaft, wenn dem Losrad des Verteilerrädersatzes die Schaltkupplung für den dritten Gang zugeordnet ist.

Zur Verbindung der Zahnräder des Verteilerrädersatzes unter Beachtung der Forderung nach einer geringen axialen Baulänge des Getriebes hat es sich als sehr vorteilhaft erwiesen, wenn auf der Vorgelegewelle eine als Richtungskupplung und/oder Gangschaltkupplung eingesetzte Schaltkupplung mit einem Losrad des Antriebsrädersatzes sowie zwei Festrädern des Verteilerrädersatzes angeordnet ist. Die axiale Baulänge des Getriebes wird, das Wandlergehäuse einmal außer acht gelassen, somit durch die einzige Schaltkupplung und ein Los- sowie zwei Festräder bestimmt.

Bei einer weiteren Lösung der der Erfindung zugrunde liegenden Aufgabe wird die Abtriebsräderkette aus Losrädern gebildet. Hierzu ist auf jeder Vorgelegewelle eine einzige Schaltkupplung angeordnet, ein Festrad und mit diesem in ständigem Eingriff befindliche Losräder bilden einen Antriebsrädersatz, das auf der Vorgelegewelle angeordnete Losrad steht mit zwei Losrädern in ständigem Eingriff und die Vorgelegewellen sind durch Festräder miteinander verbunden, die einen Verteilerrädersatz bilden. Durch die Verwendung eines Losrades ist der Fachmann bei der räumlichen Anordnung der Vorgelegewellen des Getriebes in größerem Maße frei.

Eine zweckmäßige Ausgestaltung des Wendegetriebes weist konzentrisch zueinanderliegende Eingangswellen auf. Eine als Hohlwelle ausgebildete Eingangswelle trägt das Festrad des Antriebsrädersatzes.

Aufgrund der Last-, Drehzahl- und räumlichen Verhältnisse hat es sich als sehr vorteilhaft erwiesen, daß den Losrädern, die mit dem Festrad in ständigem Eingriff stehen, Schaltkupplungen zum Schalten des ersten und zweiten Ganges zugeordnet sind.

Weitere, für die Erfindung wesentliche Merkmale sowie die daraus resultierenden Vorteile sind der nachfolgenden Beschreibung mehrerer Ausführungsbeispiele eines lastschaltbaren Wendegetriebes zu entnehmen.
Es zeigen:
- Fig. 1: ein Getriebeschema eines Wendegetriebes mit sechs Vorwärts- und drei Rückwärtsgängen und langem Achsabstand;
- Fig. 2: eine schematisierte Vorderansicht des Wendegetriebes nach Fig. 1 zur Verdeutlichung der räumlichen Lage der Vorgelegewellen und der Fest- und Losräder;
- Fig. 3: ein Getriebeschema eines Wendegetriebes mit sechs Vorwärts- und drei Rückwärtsgängen und kurzem Achsabstand;
- Fig. 4: eine schematisierte Vorderansicht des Wendegetriebes nach Fig. 3;
- Fig. 5: ein Getriebeschema eines weiteren Ausführungsbeispieles eines viergängigen Wendegetriebes mit langem Achsabstand und
- Fig. 6: eine schematische Vorderansicht des Wendegetriebes nach Fig. 5.

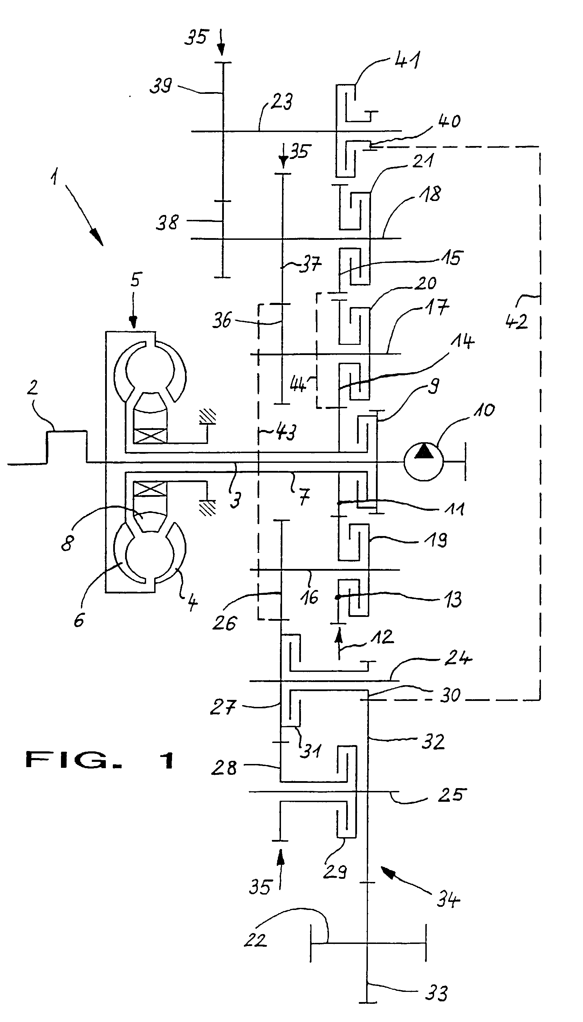

In Fig. 1 ist ein Getriebeschema eines lastschaltbaren Wendegetriebes 1 abgebildet. Es handelt sich um ein Wendegetriebe mit maximal sechs Vorwärts- und drei Rückwärtsgängen. Ein schematisch angedeuteter Motor 2 treibt eine Eingangswelle 3 des Wendegetriebes. Die Eingangswelle 3 ist mit einem Pumpenrad 4 eines hydrodynamischen Drehmomentwandlers 5 drehfest verbunden. Ein Turbinenrad 6 des hydrodynamischen Drehmomentwandlers überträgt die Antriebsleistung auf eine Hohlwelle 7, die konzentrisch zur Eingangswelle 3 liegt.

Der hydrodynamische Drehmomentwandler 5 wird durch ein Leitrad 8 vervollständigt, das über einen Freilauf abstützbar ist. Der Betriebsbereich des hydrodynamischen Drehmomentwandlers wird durch eine Wandlerüberbrückungskupplung 9 begrenzt. In herkömmlicher Weise wird am Durchtriebspunkt die Wandlerüberbrückungskupplung 9 geschlossen, so daß das Pumpenrad 4 mechanisch mit dem Turbinenrad 6 verbunden ist.

Bei der in der Zeichnung rechts liegenden Pumpe 10 handelt es sich um eine Schmiermittelpumpe, zum Beispiel eine Zahnradpumpe, die von der Eingangswelle 3 angetrieben wird.

Auf der Hohlwelle 7 ist ein Festrad 11 drehfest angeordnet, das das Eingangsrad eines Antriebsrädersatzes 12 bildet. Zu diesem Antriebsrädersatz 12 zählen Losräder 13, 14 und 15. Das Festrad 11 steht in ständigem Zahneingriff mit diesen Losrädern 13, 14 und 15. Die Losräder 13, 14 und 15 sind jeweils auf einer Vorgelegewelle 16, 17 und 18 gelagert.

Dem Losrad 13 ist eine Schaltkupplung 19, dem Losrad 14 eine Schaltkupplung 20 und dem Losrad 15 eine Schaltkupplung 21 zugeordnet.

Bei geschlossener Schaltkupplung 19 ist das Losrad 13 drehfest mit der Vorgelegewelle 16 verbunden. Das Losrad 14 ist an die Vorgelegewelle 17 gekoppelt, wenn die Schaltkupplung 20 betätigt ist. Ist die Schaltkupplung 21 geschlossen, besteht eine drehfeste Verbindung zwischen dem Losrad 15 und der Vorgelegewelle 18. Die Schaltkupplungen 19, 20 und 21 erlauben eine Umkehr der Drehrichtung einer Ausgangswelle 22 des Wendegetriebes 1. Aus diesem Grunde werden die Schaltkupplungen 19, 20 und 21 auch als Richtungskupplungen bezeichnet.

Neben den Vorgelegewellen 16, 17 und 18 sowie der Ausgangswelle 22 weist das Wendegetriebe weitere Vorgelegewellen 23, 24 und 25 auf.

Auf der Vorgelegewelle 16 ist neben dem Losrad 13 ein Festrad 26 angeordnet. Das Festrad 26 steht mit einem Festrad 27 der Vorgelegewelle 24 in ständigem Zahneingriff. Das Festrad 27 kann die Funktion eines Zwischenrades übernehmen. Auf der Vorgelegewelle 25 ist ein Losrad 28 gelagert, das mit dem Festrad 27 der Vorgelegewelle 24 im Eingriff steht. Dem Losrad 28 ist eine Schaltkupplung 29 zugeordnet, über die das Losrad 28 drehfest mit der Vorgelegewelle 25 verbunden werden kann.

Auf der Vorgelegewelle 24 ist ein Losrad 30 drehbar gelagert. Das Losrad 30 kann mit Hilfe einer weiteren Schaltkupplung 31 drehfest an das Festrad 27 angeschlossen werden.

Bei geschlossener Schaltkupplung 31 fließt die Antriebsleistung über das Losrad 30 auf ein Festrad 32 der Vorgelegewelle 25.

Auf der Ausgangswelle 22 des Wendegetriebes ist ein Festrad 33 angeordnet, das mit dem Festrad 32 der Vorgelegewelle 25 in ständiger Antriebsverbindung steht.

Das Losrad 30 und die Festräder 32 und 33 bilden eine Abtriebsräderkette 34.

Die Festräder 26, 27 und das Hohlrad 28 zählen zu einem Verteilerrädersatz 35, der durch ein weiteres Festrad 36 der Vorgelegewelle 17, zwei Festräder 37 und 38 der Vorgelegewelle 18 und ein Festrad 39 der Vorgelegewelle 23 vervollständigt wird.

Auf der Vorgelegewelle 23 befindet sich ein Losrad 40, das über eine Schaltkupplung 41 drehfest mit der Vorgelegewelle 23 verbunden werden kann. Das Losrad 40 steht in ständigem Zahneingriff mit dem Festrad 32, was durch eine gestrichelte Linie 42 angedeutet ist. Das Losrad 40 zählt somit zur Abtriebsräderkette 34.

Das Festrad 27 steht mit dem Festrad 37 des Verteilerrädersatzes 35 im Eingriff, was durch die gestrichelt eingezeichnete Linie 43 kenntlich gemacht ist. Das Losrad 15 der Vorgelegewelle 18 kämmt mit dem Festrad 11, was aus der gestrichelt eingezeichneten Linie 44 hervorgeht.

Die Schaltkupplungen 41, 31 und 29 dienen, neben den erwähnten Richtungskupplungen, der Gangschaltung und werden als Gangkupplungen bezeichnet. In jedem Gang sind je eine Richtungs- und eine Gangkupplung geschlossen.

Aus dem bisher erläuterten Aufbau des Wendegetriebes 1 geht hervor, daß die Vorgelegewellen 16 und 17 jeweils ein Losrad 13 und 14 des Antriebsrädersatzes 12 und je ein Festrad 26 und 36 des Verteilerrädersatzes 35 aufweisen.

Die Schaltkupplung 21 ist sowohl Richtungs- und Gangschaltkupplung. Auf der Vorgelegewelle 18 sind neben dem Losrad 15 des Antriebsrädersatzes 12 die Festräder 37 und 38 des Verteilerrädersatzes gelagert. Die Drehzahl und die Drehrichtung sämtlicher Zahnräder des Verteilerrädersatzes 35 wird bei Betätigung einer der Richtungskupplungen 19, 20 und 21 definiert.

Die Vorgelegewellen 23, 24 und 25, auf denen die Schaltkupplungen 41, 31 und 29 (Gangkupplungen) angeordnet sind, nehmen je ein Festrad 39, 27 und ein Losrad 28 des Verteilerrädersatzes 35 sowie jeweils ein Losrad 40, 30 und ein Festrad 32 der Abtriebsräderkette 34 auf. Wird das Wendegetriebe 1 in einer Viergang-Version betrieben, gelten folgende Verhältnisse:

| Gang | geschaltete Kupplungen |
|---|---|
| 1 | 19 und 41 |
| 2 | 19 und 31 |
| 3 | 19 und 29 |
| 4 | 21 und 29 |
| 1R | 20 und 41 |
| 2R | 20 und 31 |
| 3R | 20 und 29 |

Für eine Sechsgang-Version, bei der die Schaltkupplungen 19 und 21 als sogenannte Split-Kupplungen eingesetzt werden, gelten folgende Verhältnisse:

| Gang | geschaltete Kupplungen |
|---|---|
| 1 | 19 und 41 |
| 2 | 21 und 41 |
| 3 | 19 und 31 |
| 4 | 21 und 31 |
| 5 | 19 und 29 |
| 6 | 21 und 20 |
| 1R | 20 und 41 |
| 2R | 20 und 31 |
| 3R | 20 und 29 |

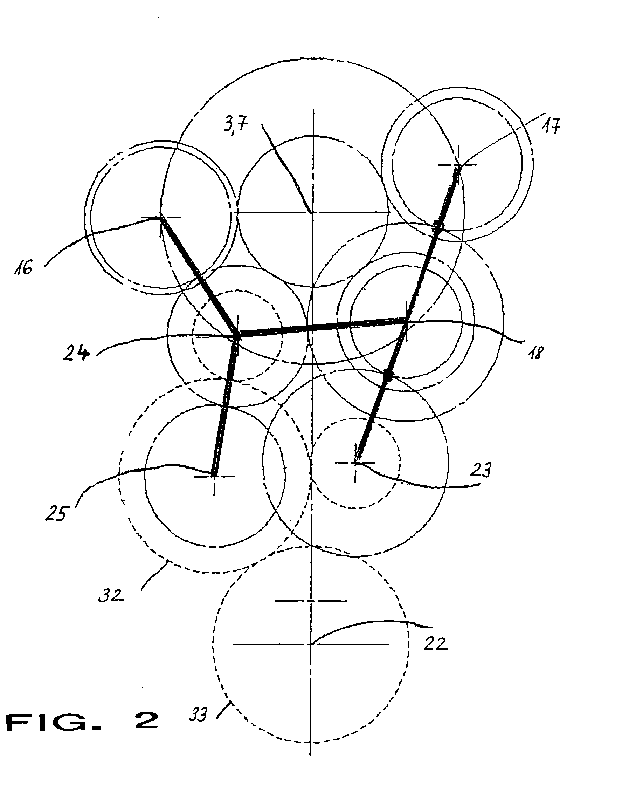

Eine schematisierte Vorderansicht des Wendegetriebes 1 nach Fig. 1 ist der Fig. 2 zu entnehmen. Das Wendegetriebe baut mit einem langen Achsabstand. Die Vorgelegewellen 16, 24, 25, 17, 18 und 23 des Verteilerrädersatzes 35 sind durch die dick eingezeichnete Linie miteinander verbunden (Verteilerkette). Diese Verteilerkette ist zwischen der Schaltkupplung 41 für den ersten Gang (Vorgelegewelle 23) und der Schaltkupplung 29 für den dritten Gang (Vorgelegewelle 25) aufgetrennt.

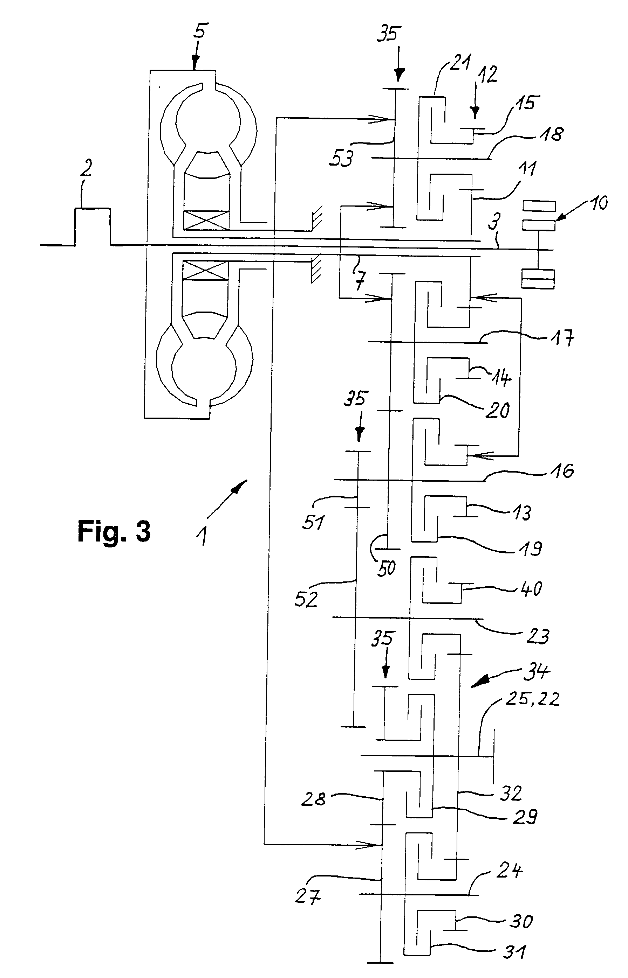

In Fig. 3 ist das Getriebeschema eines Wendegetriebes mit vier Vorwärts- und drei Rückwärtsgängen abgebildet. Es handelt sich um ein Wendegetriebe für kurze Achsabstände (ca. 120 bis 200 mm) zum Einsatz in Kranfahrzeugen, Staplern und - bevorzugt - Baggerladern. Das Wendegetriebe kann auch in einer Sechsgang-Version dargestellt werden. Das abgebildete Wendegetriebe weist funktionelle Gemeinsamkeiten zu dem Wendegetriebe nach Fig. 1 auf, so daß vergleichbare Bauteile mit den gleichen Bezugsziffern versehen sind. Auf bestehende Unterschiede wird im Rahmen der folgenden Erläuterung im einzelnen verwiesen.

Der Motor 2 treibt über den hydrodynamischen Drehmomentwandler 5 eine Hohlwelle 7 des Wendegetriebes 1. Das Festrad 11 ist auch bei diesem Getriebe mit der Hohlwelle 7 verbunden. Der Antriebsrädersatz 12 wird aus den Losrädern 13, 14 und 15 gebildet, die auf den Vorgelegewellen 16, 17 und 18 gelagert sind. Die Schaltkupplung 19 dient als Richtungskupplung für die Fahrtrichtung Vorwärts. Analog hierzu wird mit der Schaltkupplung 20 die Fahrtrichtung Rückwärts angewählt.

Das Festrad 36 der Vorgelegewelle 17 kämmt mit einem ersten Festrad 50 der Vorgelegewelle 16 und ein weiteres Festrad 51 dieser Vorgelegewelle 16 steht mit einem Festrad 52 der Vorgelegewelle 23 in kämmender Verbindung.

Die Festräder 36, 50, 51 und 52 sind Bestandteil des Verteilerrädersatzes 35. Bei dieser Anordnung sind die Festräder 50 und 51 funktionell vergleichbar mit den Festrädern 37 und 38 der Vorgelegewelle 18 des Wendegetriebes nach Fig. 1. Der Verteilerrädersatz 35 wird durch ein Festrad 53 auf der Vorgelegewelle 18, das Festrad 27 der Vorgelegewelle 24 und das Losrad 28 auf der Vorgelegewelle 25, die gleichzeitig die Ausgangswelle 22 ist, vervollständigt.

Die Abtriebsräderkette 34 wird durch das Festrad 32 großen Durchmessers der Vorgelege- bzw. Ausgangswelle 22, dem Losrad 30 der Vorgelegewelle 24 und dem Losrad 40 der Vorgelegewelle 23 gebildet.

Das Festrad 27 der Vorgelegewelle 24 steht in ständigem Zahneingriff mit einem Festrad 53, das Bestandteil des Verteilerrädersatzes 35 ist. Dieses Festrad 53 ist drehfest mit der Vorgelegewelle 18 verbunden. Die Festräder 36 und 53 stehen in ständigem Zahneingriff.

Neben den Richtungskupplungen 19 und 20 sind die Schaltkupplungen 41, 31, 29 und 21 zur Gangschaltung vorgesehen. Die einzelnen Gänge werden wie folgt geschaltet:

| Gang | betätigte Schaltkupplungen |
|---|---|
| 1 | 19 und 41 |
| 2 | 19 und 31 |
| 3 | 19 und 29 |
| 4 | 21 und 29 |
| | |
| 1R | 20 und 41 |
| 2R | 20 und 31 |
| 3R | 20 und 29 |

Damit keines der Losräder als Zwischenrad eingesetzt wird und, um insbesondere ein lose gelagertes Zwischenrad auf der Vorgelege- bzw. Ausgangswelle 25, 22 zu vermeiden, liegen die Vorgelegewellen 23, 16, 17, 18, 24 und 25 bzw. 22 in bezug auf die Eingangswelle 3 bzw. die Hohlwelle 7 so, daß sie um den Antrieb sozusagen herumgewickelt sind.

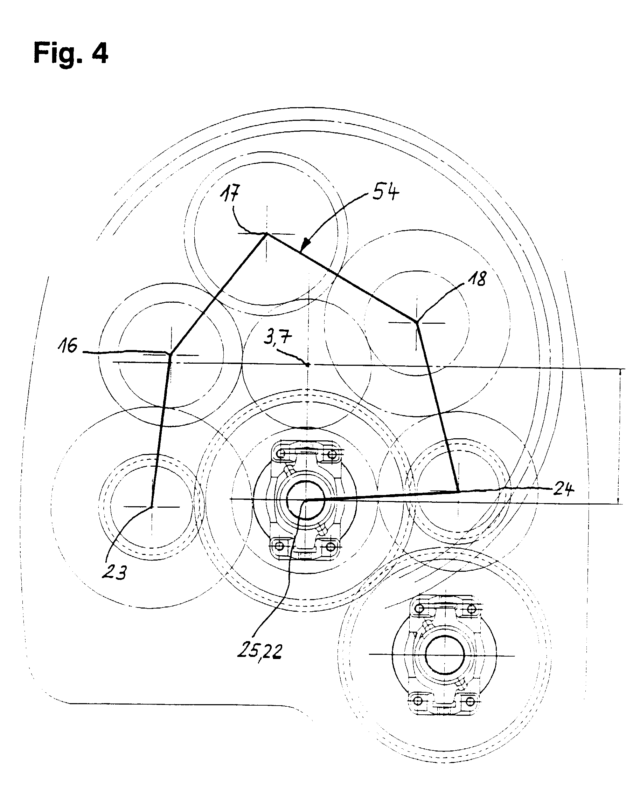

Dies geht aus der Darstellung entsprechend Fig. 4, einer schematisierten Vorderansicht auf das Getriebe, hervor. Die Lage des Verteilerrädersatzes ist durch die dick eingezeichnete Linie 54, der Verteilerkette, besonders hervorgehoben. Die Vorgelegewellen liegen zum Antrieb so, daß der Kraftfluß in dieser Verteilerkette um den Antrieb herumgeführt wird und lediglich zwischen der Vorgelegewelle 23 und 25 bzw. 22 unterbrochen ist.

Aus der Zeichnung geht hervor, daß das Getriebe bei kurzen Achsabständen eine kompakte Bauweise aufweist.

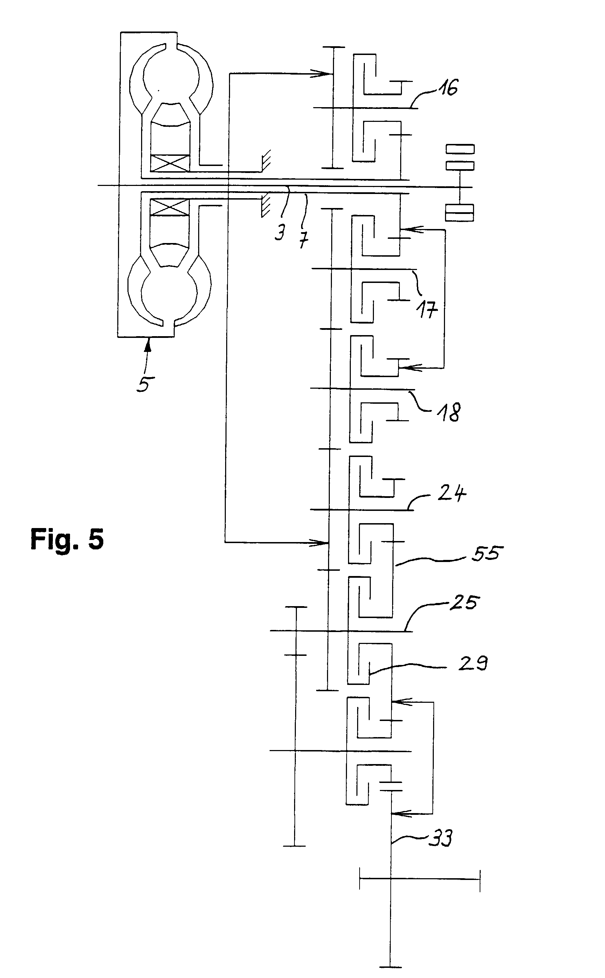

Bei dem Wendegetriebe 1, dem das Getriebeschema nach Fig. 5 zugrunde liegt, handelt es sich um eine Abwandlung sowohl des Getriebes nach Fig. 1 als auch desjenigen nach Fig. 3. Übereinstimmung mit dem Getriebe nach Fig. 1 besteht insofern, als auch mit diesem Getriebe ein langer Achsabstand verwirklicht werden soll.

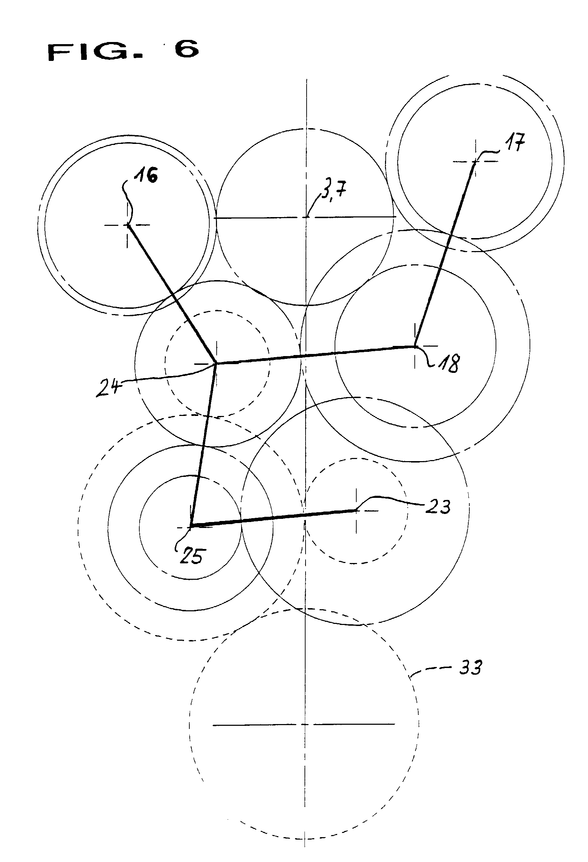

Die Abwandlung zu den Getrieben nach den Fig. 1 und 3 besteht darin, daß mit dieser Konstruktion aufgezeigt werden soll, daß das auf der Vorgelegewelle 25 angeordnete Rad mit relativ großem Durchmesser nicht zwingend ein Festrad sein muß. Es ist grundsätzlich möglich, dieses Zahnrad als Losrad 55 auszubilden, das über die Schaltkupplung 29 mit der Vorgelegewelle 25 drehfest verbunden werden kann. Das Losrad steht mit dem Festrad 33 auf der Ausgangswelle 22 des Wendegetriebes 1 in ständig kämmender Verbindung. Die Ausbildung dieses Zahnrades als Losrad 55 ist an und für sich nachteilig. Diesem Nachteil steht für den Konstrukteur der Vorteil einer größeren Freiheit in der räumlichen Anordnung der Vorgelegewellen gegenüber. Eine Möglichkeit der räumlichen Anordnung der konzentrisch zueinanderliegenden Eingangs- und Hohlwelle 3, 7 und der übrigen Vorgelegewellen zeigt die schematische Draufsicht auf das Getriebe nach Fig. 6. Die Linien, die den Verteilerrädersatz 35 miteinander verbinden, die Verteilerkette, ist wiederum mit einer dick ausgezogenen Linie besonders hervorgehoben.

### Bezugszeichen

- 1: Wendegetriebe
- 2: Motor
- 3: Eingangswelle
- 4: Pumpenrad
- 5: Drehmomentwandler
- 6: Turbinenrad
- 7: Hohlwelle
- 8: Leitrad
- 9: Wandlerüberbrückungskupplung
- 10: Pumpe
- 11: Festrad
- 12: Antriebsrädersatz
- 13: Losrad
- 14: Losrad
- 15: Losrad
- 16: Vorgelegewelle
- 17: Vorgelegewelle
- 18: Vorgelegewelle
- 19: Schaltkupplung
- 20: Schaltkupplung
- 21: Schaltkupplung
- 22: Ausgangswelle
- 23: Vorgelegewelle
- 24: Vorgelegewelle
- 25: Vorgelegewelle
- 26: Festrad
- 27: Festrad
- 28: Losrad
- 29: Schaltkupplung
- 30: Losrad
- 31: Schaltkupplung
- 32: Festrad
- 33: Festrad
- 34: Abtriebsräderkette
- 35: Verteilerrädersatz
- 36: Festrad
- 37: Festrad
- 38: Festrad
- 39: Festrad
- 40: Losrad
- 41: Schaltkupplung
- 42: Linie
- 43: Linie
- 44: Linie
- 45: -
- 46: -
- 47: -
- 48: -
- 49: -
- 50: Festrad
- 51: Festrad
- 52: Festrad
- 53: Festrad
- 54: Linie (Verteilerkette)
- 55: Losrad

## Patentansprüche

1. Unter Last schaltbares, mehrgängiges Wendegetriebe (1) mit mindestens einer Eingangswelle (3, 7) und Vorgelegewellen (16, 17, 18, 23, 24 und 25) und Zahnrädern (11, 13, 14 und 15), die einen Antriebsrädersatz (12) bilden sowie auf den Vorgelegewellen angeordneten Schaltkupplungen (19, 20, 21, 29, 31 und 41) mit Losrädern (13, 14, 15), die zur Gang- und Richtungsschaltung wahlweise drehfest mit einer der Vorgelegewellen verbindbar sind sowie einer Abtriebsräderkette (34) mit mindestens einem Festrad (32), wobei auf jeder Vorgelegewelle (16, 17, 18, 23, 24 und 25) eine einzige Schaltkupplung (19, 20, 21, 29, 31 und 41) angeordnet ist, dadurch **gekennzeichnet,** daß ein Festrad (11) und mit diesem in ständigem Eingriff befindliche Losräder (13, 14 und 15) einen Antriebsrädersatz (12) bilden, daß ein auf der Vorgelegewelle (25) angeordnetes Festrad (32) mit zwei Losrädern (30, 40) in ständigem Eingriff steht und eine Abtriebsräderkette (34) bilden und daß die Vorgelegewellen (16, 17, 18, 23, 24 und 25) durch Festräder (26, 27, 36, 37, 38 und 39) und ein Losrad (28), die einen Verteilerrädersatz (35) bilden, miteinander verbunden sind.

2. Unter Last schaltbares, mehrgängiges Wendegetriebe (1) nach Anspruch 1, dadurch **gekennzeichnet,** daß dem auf der Vorgelegewelle (25) angeordneten Festrad (32) der Abtriebsräderkette (34) ein Losrad (28) des Verteilerrädersatzes (35) gegenüberliegt.

3. Unter Last schaltbares, mehrgängiges Wendegetriebe (1) nach den Ansprüchen 1 und 2, dadurch **gekennzeichnet,** daß dem Losrad (28) des Verteilerrädersatzes (35) die Schaltkupplung (29) für den dritten Gang zugeordnet ist.

4. Unter Last schaltbares, mehrgängiges Wendegetriebe (1) nach Anspruch 1, dadurch **gekennzeichnet,** daß auf der Vorgelegewelle (18 bzw. 16) eine als Richtungskupplung und/oder Gangschaltkupplung eingesetzte Schaltkupplung (21 bzw. 19) mit einem Losrad (15 bzw. 13) des Antriebsrädersatzes (12) sowie zwei Festrädern (37 und 38) des Verteilerrädersatzes (35) angeordnet ist.

5. Unter Last schaltbares, mehrgängiges Wendegetriebe (1) nach Anspruch 1, dadurch **gekennzeichnet,** daß auf einer Vorgelegewelle (16, 18) neben einer Schaltkupplung (19, 21) bis zu zwei Festräder (37, 38 und 50, 51) angeordnet sind.

6. Unter Last schaltbares, mehrgängiges Wendegetriebe (1) mit mindestens einer Eingangswelle (3, 7) und Vorgelegewelle (16, 17, 18, 23, 24 und 25) und Zahnrädern (11, 13, 14 und 15), die einen Antriebsrädersatz (12) bilden sowie auf den Vorgelegewellen angeordneten Schaltkupplungen (19, 20, 21, 29, 31 und 41) mit Losrädern (13, 14, 15), die zur Gang- und Richtungsschaltung wahlweise drehfest mit einer der Vorgelegewellen verbindbar sind sowie einer Abtriebsräderkette (34) mit mindestens einem Festrad (33), wobei auf jeder Vorgelegewelle (16, 17, 18, 23, 24 und 25) eine einzige Schaltkupplung (19, 20, 21, 29, 31 und 41) angeordnet ist, dadurch **gekennzeichnet,** daß ein Festrad (11) und mit diesem in ständigem Eingriff befindliche Losräder (13, 14 und 15) einen Antriebsrädersatz (12) bilden, daß ein auf der Vorgelegewelle (25) angeordnetes Losrad (55) mit zwei Losrädern (30, 40) in ständigem Eingriff steht und eine Abtriebsräderkette (34) bilden und daß die Vorgelegewellen (16, 17, 18, 23, 24 und 25) durch Festräder (26, 27, 36, 37, 38 und 39) und ein Losrad (28), die einen Verteilerrädersatz (35) bilden, miteinander verbunden sind.

7. Unter Last schaltbares, mehrgängiges Wendegetriebe (1) nach den Ansprüchen 1 oder 6, dadurch **gekennzeichnet,** daß das Festrad (11) des Antriebsrädersatzes (12) auf einer Hohlwelle (7) angeordnet ist, die konzentrisch zu einer Eingangswelle (3) liegt.

8. Unter Last schaltbares, mehrgängiges Wendegetriebe (1) nach Anspruch 1, dadurch **gekennzeichnet,** daß den Losrädern (30, 40), die mit dem Festrad (32) in ständigem Eingriff stehen, Schaltkupplungen (41, 31) zum Schalten des ersten und zweiten Ganges zugeordnet sind.

## Claims

1. Power shiftable multi-speed reversing transmission (1) having at least one input shaft (3, 7) and layshafts (16, 17, 18, 23, 24 and 25) and gear wheels (11, 13, 14 and 15), which form a driving wheel set (12), as well as having, disposed on the layshafts, clutches (19, 20, 21, 29, 31 and 41) with idler wheels (13, 14, 15) which, for shifting gear and direction, are selectively connectable non-rotatably to one of the layshafts, as well as having a driven wheel system (34) with at least one fixed wheel (32), wherein a single clutch (19, 20, 21, 29, 31 and 41) is disposed on each layshaft (16, 17, 18, 23, 24 and 25), characterized in that a fixed wheel (11) and idler wheels (13, 14 and 15) constantly meshed therewith form a driving wheel set (12), that a fixed wheel (32) disposed on the layshaft (25) and two idler wheels (30, 40) are constantly meshed and form a driven wheel system (34) and that the layshafts (16, 17, 18, 23, 24 and 25) are connected to one another by fixed wheels (26, 27, 36, 37, 38 and 39) and an idler wheel (28), which form a distribution wheel set (35).

2. Power shiftable multi-speed reversing transmission (1) according to claim 1, characterized in that an idler wheel (28) of the distribution wheel set (35) lies opposite the fixed wheel (32) of the driven wheel system (34) disposed on the layshaft (25).

3. Power shiftable multi-speed reversing transmission (1) according to claims 1 and 2, characterized in that the clutch (29) for third gear is associated with the idler wheel (28) of the distribution wheel set (35).

4. Power shiftable multi-speed reversing transmission (1) according to claim 1, characterized in that disposed on the layshaft (18 and/or 16) is a clutch (21 and/or 19) used as a direction clutch and/or gearshift clutch with an idler wheel (15 and/or 13) of the driving wheel set (12) as well as with two fixed wheels (37 and 38) of the distribution wheel set (35).

5. Power shiftable multi-speed reversing transmission (1) according to claim 1, characterized in that in addition to a clutch (19, 21) up to two fixed wheels (37, 38 and 50, 51) are disposed on a layshaft (16, 18).

6. Power shiftable multi-speed reversing transmission (1) having at least one input shaft (3, 7) and layshaft (16, 17, 18, 23, 24 and 25) and gear wheels (11, 13, 14 and 15), which form a driving wheel set (12), as well as having, disposed on the layshafts, clutches (19, 20, 21, 29, 31 and 41) with idler wheels (13, 14, 15) which, for shifting gear and direction, are selectively connectable non-rotatably to one of the layshafts, as well as having a driven wheel system (34) with at least one fixed wheel (33), wherein a single clutch (19, 20, 21, 29, 31 and 41) is disposed on each layshaft (16, 17, 18, 23, 24 and 25), characterized in that a fixed wheel (11) and idler wheels (13, 14 and 15) constantly meshed therewith form a driving wheel set (12), that an idler wheel (55) disposed on the layshaft (25) and two idler wheels (30, 40) are constantly meshed and form a driven wheel system (34) and that the layshafts (16, 17, 18, 23, 24 and 25) are connected to one another by fixed wheels (26, 27, 36, 37, 38 and 39) and an idler wheel (28), which form a distribution wheel set (35).

7. Power shiftable multi-speed reversing transmission (1) according to claims 1 or 6, characterized in that the fixed wheel (11) of the driving wheel set (12) is disposed on a hollow shaft (7) which lies concentrically with an input shaft (3).

8. Power shiftable multi-speed reversing transmission (1) according to claim 1, characterized in that clutches (41, 31) for shifting first and second gear are associated with the idler wheels (30, 40), which are constantly meshed with the fixed wheel (32).

## Revendications

1. Boîte de renversement de marche (1) à vitesses multiples pouvant être enclenchées en charge, comportant au moins un arbre d'entrée (3, 7) et des arbres de renvoi (16, 17, 18, 23, 24 et 25) et des roues dentées (11, 13, 14 et 15) qui forment un train de roues d'entraînement (12), ainsi que des embrayages (19, 20, 21, 29, 31 et 41) associés aux arbres de renvoi, pourvus de roues libres (13, 14, 15) qui sont agencées pour être sélectivement couplées rigidement aux arbres de renvoi pour l'enclenchement des vitesses ou la sélection de la direction, ainsi qu'une chaîne de roues d'entraînement (34) avec au moins une roue fixe (32), dans laquelle un seul embrayage (19, 20, 21, 29, 31 et 41) est monté sur chaque arbre de renvoi (16, 17, 18, 23, 24 et 25), **caractérisée en ce** qu'une roue fixe (11) et les roues libres (13, 14 et 15), qui sont en prise permanente avec elle, constituent un train de roues d'entraînement (12), en ce qu'une roue fixe (32) montée sur l'arbre de renvoi (25) est en permanence en prise avec deux roues libres (30, 40), ces roues constituant une chaîne de roues d'entraînement (34), et en ce que les arbres de renvoi (16, 17, 18, 23, 24 et 25) sont couplés entre eux au moyen de roues fixes (26, 27, 36, 37, 38 et 39) et d'une roue libre (28) qui constituent un train de roues de distribution (35).

2. Boîte de renversement de marche (1) à vitesses multiples, selon la revendication 1, **caractérisée en ce** que la roue fixe (32) de la chaîne de roues d'entraînement (34) solidaire de l'arbre de renvoi (25) est opposée à une roue libre (28) du train de roues de distribution (35).

3. Boîte de renversement de marche (1) à vitesses multiples, selon les revendications 1 et 2, **caractérisée en ce** que la roue libre (28) du train de roues de distribution (35) est associée à l'embrayage (29) pour l'enclenchement de la troisième vitesse.

4. Boîte de renversement de marche (1) à vitesses multiples selon la revendication 1, **caractérisée en ce** que l'arbre de renvoi (18, respectivement 16) comporte un embrayage de commande (21, respectivement 19) ayant une roue libre (15, respectivement 13) du train de roues d'entraînement (12), ayant une fonction d'embrayage de changement de direction et/ou d'embrayage de changement de vitesses, ainsi que deux roues fixes (37 et 38) du train de roues de distribution (35).

5. Boîte de renversement de marche (1) à vitesses multiples selon la revendication 1, **caractérisée en ce** que l'arbre de renvoi (16, 18) comporte en outre un embrayage de commande (19, 21), jusqu'à deux roues fixes (37, 38 et 50, 51).

6. Boîte de renversement de marche (1) à vitesses multiples pouvant être enclenchées en charge, comportant au moins un arbre d'entrée (3, 7) et des arbres de renvoi (16, 17, 18, 23, 24 et 25) et des roues dentées (11, 13, 14 et 15) qui forment un train de roues d'entraînement (12), ainsi que des embrayages (19, 20, 21, 29, 31 et 41) associés aux arbres de renvoi, pourvus de roues libres (13, 14, 15) qui sont agencées pour être sélectivement couplées rigidement aux arbres de renvoi pour l'enclenchement des vitesses ou la sélection de la direction, ainsi qu'une chaîne de roues d'entraînement (34) avec au moins une roue fixe (32), dans laquelle un seul embrayage (19, 20, 21, 29, 31 et 41) est monté sur chaque arbre de renvoi (16, 17, 18, 23, 24 et 25), **caractérisée en ce** qu'une roue fixe (11) et les roues libres (13, 14 et 15), qui sont en prise permanente avec elle, constituent un train de roues d'entraînement (12), en ce qu'une roue libre (55) montée sur l'arbre de renvoi (25) est en permanence en prise avec deux roues libres (30, 40), ces roues constituant une chaîne de roues d'entraînement (34), et en ce que les arbres de renvoi (16, 17, 18, 23, 24 et 25) sont couplés entre eux au moyen de roues fixes (26, 27, 36, 37, 38 et 39) et d'une roue libre (28) qui constituent un train de roues de distribution (35).

7. Boîte de renversement de marche (1) à vitesses multiples selon les revendications 1 ou 6, **caractérisée en ce** que la roue fixe (11) du train de roues d'entraînement (12) est montée sur un arbre creux (7) qui est concentrique à un arbre d'entrée (3).

8. Boîte de renversement de marche (1) à vitesses multiples selon la revendication 1, **caractérisée en ce** que les roues libres (30, 40), qui sont en prise permanente avec la roue fixe (32), sont associées à des embrayages de commande des vitesses (41, 31) pour l'enclenchement des première et deuxième vitesses.
